Europäisches Patentamt

European Patent Office

Office européen des brevets

(19)

(11) Numéro de publication : **0 228 399 B1**

(12) # FASCICULE DE BREVET EUROPEEN

(45) Date de publication du fascicule du brevet :
27.03.91 Bulletin 91/13

(51) Int. Cl.⁵ : **A61C 8/00**

(21) Numéro de dépôt : 86903432.2

(22) Date de dépôt : 13.06.86

(86) Numéro de dépôt international :
PCT/FR86/00205

(87) Numéro de publication internationale :
WO 87/00030 15.01.87 Gazette 87/01

(54) **IMPLANT DENTAIRE MIXTE.**

(30) Priorité : 03.07.85 FR 8510188

(43) Date de publication de la demande :
15.07.87 Bulletin 87/29

(45) Mention de la délivrance du brevet :
27.03.91 Bulletin 91/13

(84) Etats contractants désignés :
BE CH DE FR GB IT LI

(56) Documents cités :
DE-A- 882 466
FR-A-21 791 57
US-A-41 226 05

(73) Titulaire : BOUKHRIS, Gilles
46, boulevard de Reuilly
F-75012 Paris (FR)
Titulaire : OUAKIL, Sylvain
1, place Gambetta
F-75020 Paris (FR)
Titulaire : NETTER, Jean-Claude
11, avenue d'Eylau
F-75016 Paris (FR)

(72) Inventeur : BOUKHRIS, Gilles
46, boulevard de Reuilly
F-75012 Paris (FR)
Inventeur : OUAKIL, Sylvain
1, place Gambetta
F-75020 Paris (FR)
Inventeur : NETTER, Jean-Claude
11, avenue d'Eylau
F-75016 Paris (FR)

**Description**

L'invention porte sur un implant dentaire selon le préambule de la revendication 1.

Le document DE-C-882466 décrit un implant dentaire formé par une plaque métallique de base fixée à l'os maxillaire par une vis et ayant un ou plusieurs trous filetés destinés à recevoir le support fileté d'une dent artificielle.

L'invention concerne en particulier un implant dentaire fait de deux parties "A" et "B". La partie "A" faite de métal chrome cobalt doré à l'or fin par électrolyse et chauffée à 1000 degrés environ, est elle même subdivisée en deux parties, l'une intra osseuse "a" et l'autre gingivo buccale "b". La partie "B" faite de matériau thermo-plastique (PVDP) jouera le rôle d'un écrou auto-serrant sur la partie "a".
(PVDF)= Polyfluore de Vinylidène.

METHODE

Dans un premier temps, un puits d'un diamètre légèrement supérieur au diamètre de la partie "a" est foré à égale distance de la crête édentée d'une longueur déterminée par les obstacles anatomiques.

Puis un décollement de la fibromuqueuse mettra à nu l'os des maxillaires et une fenêtre y sera creusée pour permettre l'insertion de la partie "B". Ainsi la partie "a" en forme de vis va pénétrer la partie "B" incluse dans l'os qui aura été précédemment perforée à travers le puits avec un foret de 1 mm de diamètre. Cette même partie "a" sera limitée dans sa pénétration par la partie "b" de diamètre supérieur.

L'avantage de cette méthode c'est qu'elle lèse à minima l'os puisqu'elle évite la saignée verticale.

L'implant ne peut plus s'enfoncer grâce à la partie "b", ne peut plus être expulsé grâce à la partie "B" et ne peut pas se dévisser seul grâce à l'action auto-serrante de "B".

CONCEPTION

PARTIE A :

Cette partie métallique en chrome cobalt sera recouverte d'une couche d'or (de quelques microns) à 24 carats Cette couche d'or va avoir deux actions :
– La première c'est de se lier à l'oxyde de chrome cobalt lors d'une montée en température à mille degrés et de créer une couche d'un métal couleur noire canon qui rendra le chrome cobalt encore moins oxydable.
– La deuxième action c'est de permettre la cuisson de la céramique sur le chrome cobalt en obtenant une liaison physique et chimique
Cette partie "A" est composée de deux segments:
– Le premier segment "a" est fileté, d'environ deux millimètres de diamètre avec environ douze stries par centimètre de filetage, et pouvant mesurer entre un centimètre de long et quatre centimètres.
Ceci en fonction de la hauteur d'os disponible et des obstacles anatomiques.
– Le deuxième segment gingivo buccal "b" situé dans le prolongement du segment "a" aura un diamètre d'environ quatre millimètres, une hauteur de cinq millimètres et aura une forme concave sur sa circonférence pour permettre à la gencive de se nicher dedans.

Le segment "b" à la jonction du segment "a" sera de forme convexe afin de prendre sa place dans un avant trou ménagé sur la crête osseuse lors de la mise en place de l'implant. Le quart supérieur du segment "b" à l'opposé du segment "a" sera de forme conique (f) et non recouvert de céramique vitreuse alors que tout le reste du segment "b" sera recouvert de céramique bio compatible et vitreuse. Sur toute la hauteur du segment "b" se trouvera un logement (g) non cylindrique pour permettre la pose d'un élément prothétique ou servir d'ancrage à une superstructure prothétique.

PARTIE B :

De forme parallélépipédique d'environ deux millimètres d'épaisseur (I), huit millimètres de long (II) et d'environ cinq millimètres de large (III) sera fabriqué en PVDF (matériau biocompatible). Il présente sur sa tranche deux pertuis de six dixième de millimètres de diamètre (IV) et s'engageant parallèlement et sur le même plan vers le côté opposé.

Ces deux pertuis seront éspacés de trois millimètres. Leur rôle sert à la préhension et à la mise en place par un instrument adéquat de la partie "B" dans la fenêtre osseuse ménagée à cet effet.

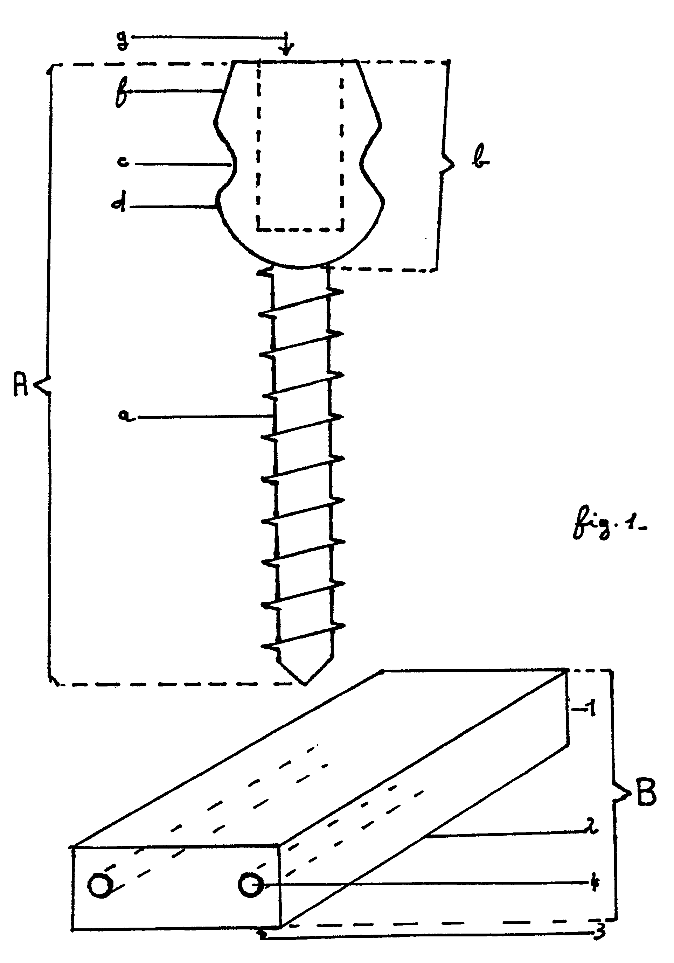

**Revendications**

1. Implant dentaire composé par une partie métallique (A), composée par un segment (a) en forme de vis fileté et par une tête (b) située sur le prolongement de la partie (a) et une partie (B) formant écrou pour le segment (a), caractérisé en ce que la partie (A) est réalisée en chrome cobalt doré à l'or fin par électrolyse et chauffée à 1000 degrés environ et que la partie (B) est réalisée en matériau thermoplastique et forme un écrou autoserrant.

2. Implant dentaire selon la revendication 1 caractérisé en ce que la tête (b) présente une forme convexe à la jonction avec le segment (a), une forme concave (c) sur sa circonférence et une forme conique en son quart supérieur (f) à l'opposé du segment (a).

3. Implant dentaire selon la revendication 1 caractérisé en ce que la tête (b) présente un logement non cylindrique (g) dans sa partie supérieure.

4. Implant dentaire selon la revendication 2 caractérisé en ce que la tête (b) est recouverte de céramique bio-compatible à l'exception de la zone conique supérieure (f).

## Ansprüche

1. implantat, einen metallischenteil enthaltend,mit einer gewundesschraube gemacht und mit einem kopf in der verlängerung des teiles (a) gesetz,und ein teil (b) wirkliche sellstbremsschraube durch den teil (a) bezeichnet,in chrom-kobalt verarbeitet,mit gold uberzogen,um 1000 erwärmt und der teil (b) mit einem thermoplastischen stoff gemacht, erselbst bremsschraube bildend.

2. implantat, im einverständniss mit der forderung n°1 durch den konvexkopf in der verbindung mit dem teil (a) bezeichnet, durch die konkavseite des umfanges (c) und ein konishe oberviertel dem teil (a) gegenüber liegend.

3. implantat, im einverständniss mit der forderung n°1 durch den kopf bezeichnet dessen korper mit einem nichtzylindrischen loch durchgebohrt ist.

4. implantat, im einverständniss mit der forderung n°2 durch einen keramisch-überzogen kopf, ausschliesslich des konischen oberteil.

## Claims

1. Dental implant including a metallic part (A), itself consisting of a threaded fixture and a head situated in prolongation of the part (a) and a part (b) actually self lockingnut for (a), characterized by the part (a) treated with chrome cobalt electrogilded, until about 1000 : heated and the part (b) made with a thermoplastic material acting as a self locknut ;

2. dental implant,according to the claim n°1, characterized by the convex-shoped circumference as it is joining the part (a) ; by a concave shoped circumference (c) and a conical upperquarter opposite part (a).

3. dental implant according to the claim n°1 characterized by the head (b) : its body is hollowed by a non cylindrical hole in its upperpart.

4. dental implant according to the claim n°2 characterized by a ceramic coated head,except the conical upper area.

fig. 1.